# FASCICULE DE BREVET EUROPEEN

(11) **EP 4 622 506 B1**
(45) Date de publication et mention de la délivrance du brevet: **01.07.2026**
(21) Numéro de dépôt: 23809600.2
(22) Date de dépôt: 21.11.2023
(51) Int. Cl.: A47C 7/02, A47C 23/00, A47C 27/06, B22F 5/10, B22F 10/28, B29D 99/00, B33Y 10/00, B33Y 80/00, B60N 2/70

(54) **PIÈCE COMPORTANT UNE STRUCTURE MONOLITHIQUE ARCHITECTURÉE EN TREILLIS**
TEIL MIT EINER MONOLITHISCHEN ARCHITEKTONISCHEN NETZSTRUKTUR
PART COMPRISING A MONOLITHIC ARCHITECTURAL MESH STRUCTURE

(30) Priorité: 22.11.2022 FR 2212166
(43) Date de publication de la demande: 01.10.2025
(73) Titulaire: Commissariat à l'Energie Atomique et aux Energies Alternatives, 75015 Paris (FR)
(72) Inventeur: BOUVIER, Michaël, 38054 GRENOBLE CEDEX 09 (FR); GLEYZES, Hervé, 38054 GRENOBLE CEDEX 09 (FR)
(74) Mandataire: Ipsilon
(86) Numéro de dépôt international: PCT/EP2023/082614
(87) Numéro de publication internationale: WO 2024/110498

(56) Documents cités:
- EP-A1- 3 611 797
- EP-A1- 3 954 252
- US-A1- 2021 316 501

## Description

### Domaine technique

La présente invention concerne le domaine des structures architecturées en treillis, notamment pour former des dispositifs comportant une interface souple, par exemple molletonnée. Ces structures architecturées en treillis peuvent être destinées à absorber un choc et/ou à former un appui corporel, tel qu'une assise d'un siège, un coussin, un matelas, un accoudoir, un appui-tête, un repose-poignet, une poignée de préhension ou un rembourrage de casque.

### Etat de la technique antérieure

Les structures monolithiques avec une architecture en treillis présentent une porosité ouverte importante. Elles sont formées de brins ou poutres, généralement denses, connectés entre eux selon des motifs géométriques élémentaires qui se répètent périodiquement dans l'espace. Elles peuvent présenter des propriétés mécaniques en compression avantageuses, en étant notamment aptes à supporter de grandes déformations sans rupture ou déformation irréversible. Elles sont ainsi adaptées à des applications où l'aptitude à stocker et/ou dissiper de l'énergie sous compression est importante, par exemple pour la conception d'amortisseurs de chocs. Elles sont aussi adaptées à des applications pour lesquelles la sensation de confort d'utilisation est recherchée, par exemple pour la conception de supports de soutien corporel, tels des assises de sièges, des coussins, des matelas, des accoudoirs, des appui-têtes, des repose-poignets ou des organes de préhension, par exemple des poignées.

Dans ces applications, il est notamment recherché des structures présentant un module de rigidité élastique faible et/ou aptes à absorber et/ou dissiper une quantité d'énergie de déformation avant rupture, aussi dénommée densification par unité de volume, élevée.

Les propriétés mécaniques en compression d'une structure monolithique architecturée en treillis sont fonction du matériau source constitutif et diffèrent en fonction du motif géométrique élémentaire formé par les brins/poutres. L'article de M. Nasim et U. Galvanetto : « Mechanical characterisation of additively manufactured PA12 lattice structures under quasi-static compression », Materials Today Communications, Volume 29, 2021, 102902, compare les propriétés mécaniques de matériaux architecturé en treillis en fonction du motif élémentaire des brins/poutres.

Parmi différents motifs élémentaires connus, le motif de type dodécaédrique rhombique présente un faible module de rigidité élastique et permet une forte densification par unité de volume.

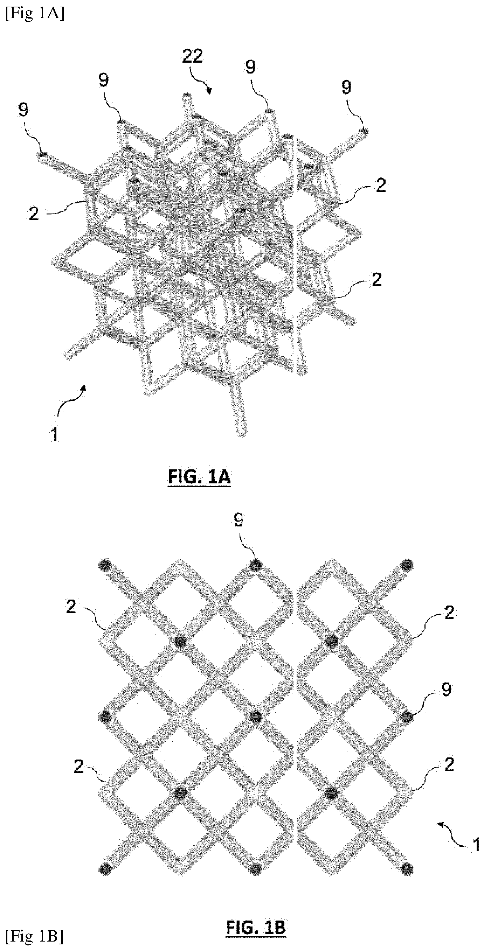

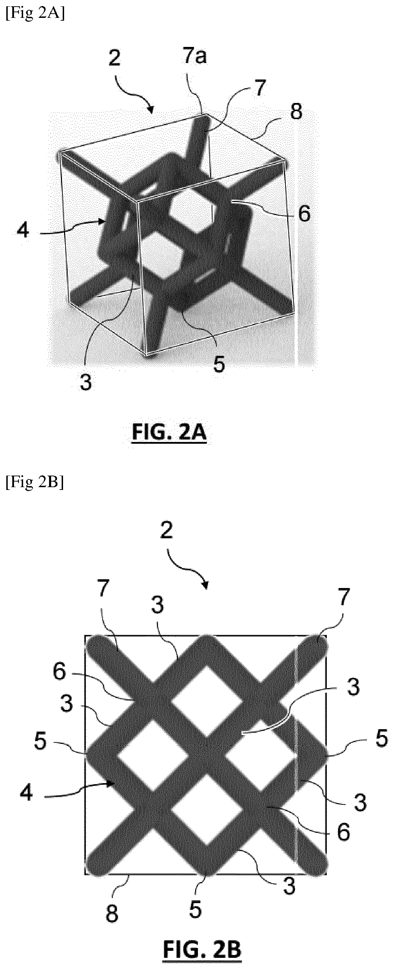

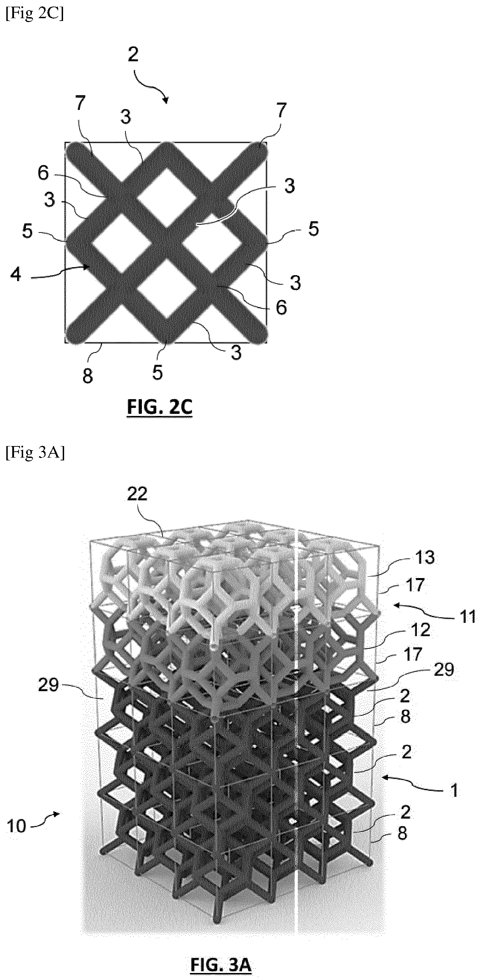

On a illustré aux figures 1A et 1B un treillis 1 formé d'une pluralité de motifs élémentaires de type dodécaédrique rhombique 2 répétés périodiquement et en contact les uns avec les autres et aux figures 2A, 2B et 2C un motif élémentaire de type dodécaédrique rhombique 2. Le motif élémentaire 2 comprend vingt-quatre brins 3 liés entre eux de sorte à former les arêtes d'un dodécaèdre rhombique 4. Le dodécaèdre rhombique 4 comprend six sommets à angles aigus 5 et huit sommets à angles obtus 6. Un sommet à angle aigu 5 est un sommet où quatre faces du dodécaèdre rhombique 4 se rencontrent sur leurs angles aigus. Un sommet à angle obtus 6 est un sommet où trois faces du dodécaèdre rhombique 4 se rencontrent sur leurs angles obtus. Le motif élémentaire 2 est inscrit dans une cellule élémentaire 8, qui correspond au parallélépipède rectangle circonscrit à chacun des sommets à angles aigus 5. Le motif élémentaire 2 comprend également huit brins de liaison 7, chacun reliant un des sommets à angles obtus 6 au sommet le plus proche de la cellule élémentaire 8. Les brins de liaison 7 s'étendent le long des diagonales de la cellule élémentaire 8.

Le motif élémentaire de type dodécaédrique rhombique 2 est similaire au motif dénommé « fluorite » dans le logiciel « nTopology 3.26.3 » développé et commercialisé par la société nTopology, INC. En effet, il est similaire à une structure cristalline de la fluorite pour laquelle chacun des sites atomiques auraient été reliés entre eux par des brins.

Comme cela est illustré aux figures 1A et 1B, les motifs élémentaires de type dodécaédrique rhombique 2 adjacents sont fixés entre eux par contact entre leurs brins de liaison 7 respectifs et par contact entre leurs sommets à angle aigu respectifs.

Bien qu'une structure monolithique architecturée en treillis 1 selon un motif élémentaire 2 périodique de type dodécaédrique rhombique présente de bonnes caractéristiques mécaniques, notamment pour la substitution de certaines mousses de polyuréthane, elle présente toutefois une faible surface de contact 9. La surface de contact 9 est l'ensemble des points de la structure 1 de la surface enveloppant une face extérieure 22 de ladite structure 1. Pour la structure monolithique architecturée en treillis 1 des figures 1A et 1B, la surface de contact 9 est définie par les extrémités 7a des brins de liaison 7 et des sommets à angles aigus 5 sur la face extérieure 22 de la structure 1. Ainsi, lors de la mise en contact d'un solide, par exemple une partie d'un corps humain, contre la structure 1, l'effort de contact est réparti sur une aire de contact faiblement étendue. Il en résulte des contraintes localement élevés au contact de la surface de contact 9. Ainsi, lors d'un appui corporel, il en résulte une sensation d'inconfort, les brins libres et les arêtes agissant alors à la manière d'un ensemble de pointes.

EP 3 611 797 A1 concerne une structure au moins partiellement transparente aux signaux radiofréquences, constituée d'un matériau polyédrique tesselé comprenant une pluralité de cellules polyédriques.

EP 3 954 252 A1 concerne un élément de coussin de siège passager et un corps de remplissage.

US 2021/316501 A1 concerne des métamatériaux structuraux et, en particulier, des métamatériaux structuraux comprenant des réseaux enchevêtrés.

Il existe donc un besoin pour une structure monolithique architecturée en treillis surmontant ces inconvénients.

### Exposé de l'invention

L'invention concerne une pièce comportant une structure monolithique architecturée en treillis comprenant :
- un treillis de corps comportant une pluralité de motifs élémentaires de corps répétés périodiquement et en contact les uns avec les autres, chaque motif élémentaire de corps comportant des brins de corps reliés entre eux pour former les arêtes d'un dodécaèdre rhombique et des brins de liaison reliant les sommets à angles obtus du dodécaèdre rhombique aux sommets de la cellule élémentaire de corps, qui est le plus petit parallélépipède rectangle circonscrit au dodécaèdre rhombique,
- un treillis de peau comportant une pluralité de motifs élémentaires de peau répétés périodiquement et en contact les uns avec les autres, chaque motif élémentaire de peau comportant des poutres de peau reliées entre elles pour former les arêtes d'un octaèdre tronqué et des poutres de liaison reliant les poutres de peau à au moins une partie des sommets de la cellule élémentaire de peau, qui est un parallélépipède rectangle circonscrit à deux faces rhombiques de l'octaèdre tronqué opposées entre elles et aux arêtes de l'octaèdre tronqué contenues dans un plan médian, lesdites faces rhombiques étant symétriques l'une de l'autre par rapport au plan médian,
le treillis de peau recouvrant au moins partiellement le treillis de corps, des motifs élémentaires de corps étant en contact avec des motifs élémentaires de peau.

Un « dodécaèdre rhombique » est un polyèdre convexe à douze faces rhombiques. Il comprend six sommets à angles aigus, huit sommets à angles obtus et vingt-quatre arêtes.

Un « octaèdre tronqué » est un polyèdre convexe possédant huit faces hexagonales et six faces rhombiques. Il comprend vingt-quatre sommets et trente-six arêtes.

Une « cellule élémentaire » est le plus petit parallélépipède rectangle circonscrit à un motif élémentaire. La cellule élémentaire est une construction géométrique fictive, c'est-à-dire qu'elle n'est pas constituée de matière contrairement aux brins ou aux poutres.

La pièce selon l'invention présente ainsi des propriétés mécaniques similaires à une structure en treillis formée d'une pluralité de motifs élémentaires de type dodécaédrique rhombique. Elle présente un faible module de rigidité élastique. De plus, la pièce présente une surface de contact plus élevée que la structure en treillis décrite dans l'état de l'art antérieur. En effet, le treillis de peau permet, avantageusement, d'augmenter la surface de contact de la structure architecturée en treillis sans influencer de manière conséquente les propriétés mécaniques de cette dernière qui sont majoritairement déterminées par le treillis de corps. Il en résulte que, la contrainte au contact est moindre lors d'un appui corporel, et la pièce est donc plus confortable pour l'utilisateur.

En outre, les motifs élémentaires de peau sont complémentaires des motifs élémentaires de corps, c'est-à-dire que, lors d'un effort en compression appliqué sur les motifs élémentaires de peau, ceux-ci transmettent de manière homogène cet effort aux motifs élémentaires de corps. Il en découle une bonne répartition des contraintes dans l'ensemble de la structure architecturée en treillis et donc un meilleur confort pour l'utilisateur.

De préférence, les poutres de liaison s'étendent le long des diagonales de la cellule élémentaire de peau. Les diagonales d'un parallélépipède rectangle sont définies comme les segments reliant chacun des sommets du parallélépipède rectangle à son sommet le plus éloigné.

De préférence, chaque motif élémentaire de peau en contact avec un motif élémentaire de corps est orienté de sorte qu'une des faces de la cellules élémentaire de peau correspondante, contenant une des faces rhombiques de l'octaèdre tronqué, est confondue avec une face de la cellule élémentaire de corps correspondante. De préférence, ladite face de la cellule élémentaire de peau et ladite face de la cellule élémentaire de corps partagent les mêmes sommets. De préférence, au moins un, de préférence chacun desdits motifs élémentaires de peau a des poutres de liaison reliant l'octaèdre tronqué à chacun des sommets de ladite face de la cellule élémentaire de peau.

Au moins un, de préférence chacun, des motifs élémentaires de peau définissant une face extérieure de la structure architecturée en treillis est dépourvu de poutres de liaison orientés de l'octaèdre tronqué vers les sommets de ladite face extérieure. Avantageusement, la surface de contact de la structure architecturée en treillis formée par le treillis de peau ne comprend pas ou peu de forme pointue.

Au moins un, de préférence chacun, des motifs élémentaires de peau définissant une face extérieure de la structure poreuse, comporte uniquement des poutres de liaison en contact avec au moins l'un des motifs élémentaires de peau adjacents et/ou l'un des motifs élémentaire de corps adjacents.

De préférence, chacun des motifs élémentaires de peau définissant une face extérieure de la structure architecturée en treillis est orienté de sorte que la face extérieure contient une des faces rhombiques de l'octaèdre tronqué, de préférence ladite face rhombique étant une des faces inscrite à la cellule élémentaire de peau correspondante.

De préférence, le volume entre les poutres de peau formant ladite face rhombique est plein, et de préférence fait du matériau formant les poutres de peau. Cela permet avantageusement d'augmenter la surface de contact de la pièce sans modifier de manière conséquente ses propriétés mécaniques.

La pièce peut comprendre des pastilles, de préférence planes, portées par les poutres de peau formant ladite face rhombique, les pastilles présentant une surface supérieure ou égale à la face rhombique. Les pastilles augmentent ainsi la surface de contact de la pièce.

De préférence, les faces de la cellule élémentaire de peau contenant chacune une face rhombique de l'octaèdre tronqué sont carrées, de préférence de côté compris entre 5 mm et 50 mm. Ainsi, les faces rhombiques de l'octaèdre tronqué inscrites dans la cellule élémentaire de peau sont également carrées.

La distance entre les deux faces de la cellule élémentaire de peau contenant les faces rhombiques de l'octaèdre tronqué, mesurée orthogonalement auxdites faces, peut être inférieure au plus petit côté de chacune desdites faces de la cellule élémentaire de peau, de préférence comprise entre 5 mm et 30 mm. Ainsi, l'octaèdre tronqué de la cellule élémentaire de peau a une forme écrasée. Cela permet, avantageusement, de limiter le volume occupé par le treillis de peau comparativement au volume total de la structure architecturée en treillis, et donc, de limiter son influence sur les propriétés mécaniques de la structure architecturée en treillis.

En variante, la distance entre les deux faces de la cellule élémentaire de peau contenant les faces rhombiques de l'octaèdre tronqué, mesurée orthogonalement auxdites faces, peut être supérieure au plus petit côté de chacune desdites faces de la cellule élémentaire de peau, de préférence comprise entre 5 mm et 30 mm. Ainsi, l'octaèdre tronqué de la cellule élémentaire de peau a une forme dilatée. Cela permet, avantageusement, de réduire le nombre de strates de motifs élémentaires de peau comprises par le treillis de peau tout en conservant un même volume occupé par le treillis de peau.

Une strate de motifs élémentaires de peau correspond à l'ensemble des motifs élémentaires de peau en contact les uns aux autres et s'étendant dans un plan.

La cellule élémentaire de corps peut être cubique, de préférence de côté compris entre 5 mm et 50 mm. Autrement dit, le dodécaèdre rhombique du motif élémentaire de corps est régulier.

De préférence, le diamètre des poutres de peau et le diamètre des poutres de liaison sont chacun inférieur au diamètre des brins de corps et au diamètre des brins de liaison. La diminution du diamètre des poutres de peau et des poutres de liaison provoque une diminution du module de rigidité élastique du treillis de peau et de la quantité d'énergie absorbée par le treillis de peau avant rupture ou densification par unité de volume. Ainsi, la rigidité du treillis de peau diminue par rapport à la rigidité du treillis de corps, jusqu'à, de manière préférentielle, ce que la rigidité du treillis de peau soit inférieure ou égale, de préférence inférieure, à la rigidité du treillis de corps.

De préférence, le diamètre des brins de corps et le diamètre des brins de liaison sont égaux et/ou le diamètre des poutres de peau et le diamètre des poutres de liaison sont égaux.

Le diamètre des brins de corps et/ou le diamètre des brins de liaison peuvent être compris entre 0,6 mm et 3,0 mm, de préférence entre 0,8 mm et 2,0 mm.

Le diamètre des poutres de peau et/ou le diamètre des poutres de liaison peuvent être compris entre 0,6 mm et 3,0 mm, de préférence entre 0,8 mm et 2,0 mm.

De préférence, les brins de corps et/ou les brins de liaison et/ou les poutres de peau et/ou les poutres de liaison sont en un matériau polymère ou en un métal ou en composite, par exemple en un thermoplastique, de préférence en un thermoplastique élastomère, ou en un polymère chargé de micro-billes de verre.

De préférence, le volume occupé par le treillis de corps représentant au moins 50 % du volume total occupé par la structure architecturée en treillis.

Le treillis de peau peut comprendre moins de 5 strates de motifs élémentaires de peau.

Par exemple, le treillis de peau peut comprendre une première strate de motifs élémentaires de peau en contact avec les motifs élémentaires de corps et dont tous les sommets de leur cellule élémentaire de peau sont reliés par une poutre de liaison, et, une deuxième strate, superposée à la première, de motifs élémentaires de peau dont les sommets des faces des cellules élémentaires de peau en superficie de la structure architecturée en treillis, c'est-à-dire définissant une face extérieure de la structure architecturée en treillis, ne sont pas reliés avec une poutre de liaison. Ainsi, seules les sommets des faces des cellules élémentaires de peau de la deuxième strate confondues avec la première strate sont reliés avec une poutre de liaison. On appelle les motifs élémentaires de peau de la première strate des motifs élémentaires de type octaèdre tronqué simple, et, les motifs élémentaires de peau de la deuxième strate des motifs élémentaires de type octaèdre tronqué modifié.

Selon un autre exemple, le treillis de peau peut comprendre une unique strate de motifs élémentaires de peau de type octaèdre tronqué modifié. Ainsi, les sommets des faces des cellules élémentaires de peau confondues avec des cellules élémentaires de corps sont reliés avec une poutre de liaison et les sommets des faces des cellules élémentaires de peau en superficie, c'est-à-dire définissant une face extérieure de la structure architecturée en treillis, de la structure architecturée en treillis ne sont reliés à aucune poutre de liaison.

L'invention concerne également un dispositif comportant une pièce selon l'invention et étant choisi parmi :
- un amortisseur de choc,
- un support de soutien corporel, par exemple une assise d'un siège, un coussin, un matelas, un accoudoir, un appui-tête, un rembourrage de casque, ou un repose-poignet, et
- un organe de préhension, par exemple une poignée de préhension ou un volant directionnel.

L'invention a enfin pour objet un procédé de fabrication d'une pièce selon l'invention, le procédé comportant la production de la structure architecturée en treillis au moyen d'une technique de fabrication additive.

### Brève description des dessins

D'autres avantages et caractéristiques ressortiront mieux à la lecture de la description détaillée, faite à titre illustratif et non limitatif, en référence aux figures suivantes :
[Fig 1A] et [Fig 1B] sont des vues en perspective et de dessus respectivement d'un treillis comportant une pluralité de motifs élémentaires périodiques de type dodécaédrique rhombique ;
[Fig 2A], [Fig 2B] et [Fig 2C] sont des vues en perspective, de dessus et de face respectivement d'un motif élémentaire de type dodécaédrique rhombique ;
[Fig 3A] et [Fig 3B] sont des vues en perspective et de face respectivement d'une pièce comportant une structure monolithique architecturée en treillis selon l'invention ;
[Fig 4A] et [Fig 4B] sont des vues en perspective et de dessus respectivement d'un treillis comportant une pluralité de motifs élémentaires périodiques de type octaédrique tronqué simple ;
[Fig 5A] et [Fig 5B] sont des vues en perspective d'un motif élémentaire de type octaédrique tronqué simple ;
[Fig 5C] et [Fig 5D] sont des vue de dessus et de face respectivement d'un motif élémentaire de type octaédrique tronqué simple ;
[Fig 6A] et [Fig 6B] sont des vues en perspective et de dessus respectivement d'un treillis comportant une pluralité de motifs élémentaires périodiques de type octaédrique tronqué simple et de type octaédrique tronqué modifié ;
[Fig 7A] et [Fig 7B] sont des vues en perspective d'un motif élémentaire de type octaédrique tronqué modifié ;
[Fig 7C] et [Fig 7D] sont des vue de dessus et de face respectivement d'un motif élémentaire de type octaédrique tronqué modifié ;
[Fig 8] est une vue du dessus d'un treillis comportant une pluralité de motifs élémentaires périodiques de type octaédrique tronqué modifié, des pastilles planes recouvrant des faces carrés superficielles dudit treillis ;
[Fig 9] est une photographie d'une pièce comportant une structure monolithique architecturée en treillis selon l'invention ; et
[Fig 10] est un graphique représentant les évolutions de la contrainte en fonction de la déformation au cours essai de compression d'une structure architecturée en treillis architecturée en treillis avec des motifs élémentaires périodiques de type dodécaédrique rhombique et d'une structure architecturée en treillis selon l'invention.

### Description détaillée

Par souci de clarté, les mêmes références désignant les mêmes éléments selon l'état de l'art et selon l'invention sont utilisées pour toutes les figures 1A à 10.

Les figures 1A à 2C ont été décrites dans la description de l'état de la technique antérieure.

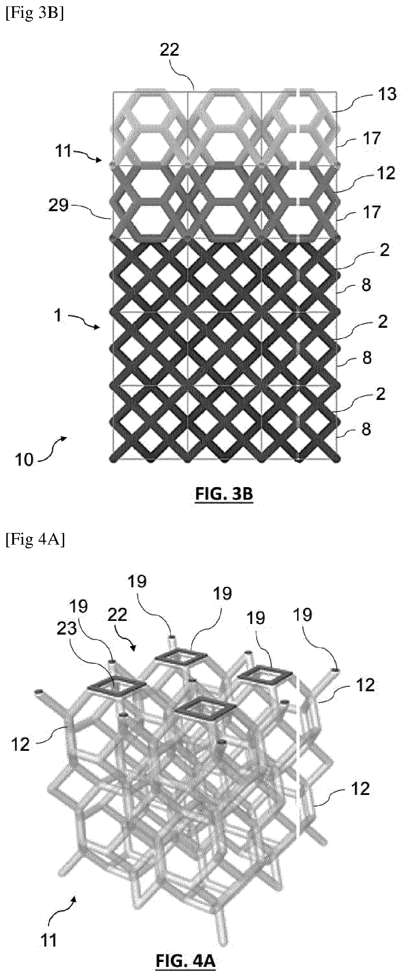

On a illustré aux figures 3A et 3B une pièce comportant une structure architecturée en treillis 10 selon l'invention. La structure architecturée en treillis 10 est monolithique et comporte un treillis de corps 1 et un treillis de peau 11 recouvrant le treillis de corps 1.

Le treillis de corps 1 est similaire au treillis 1 décrit dans le préambule et illustré aux figures 1A et 1B. Le treillis de corps 1 comporte une pluralité de motifs élémentaire de corps 2 répétés périodiquement dans l'espace et en contact les uns avec les autres. Les motifs élémentaires de corps 2 sont des motifs élémentaires de type dodécaédrique rhombique 2 tels que décrits préalablement et illustrés aux figures 2A, 2B et 2C. Aussi, l'ensemble des caractéristiques déjà décrites concernant le treillis 1 et les motifs élémentaires de type dodécaédrique rhombique 2 des figures 1A à 2C sont applicables au treillis de corps 1 et aux motifs élémentaires de corps 2.

Le treillis de peau 11 comprend une pluralité de motifs élémentaires de peau 12 et 13 répétés périodiquement dans l'espace et en contact les uns avec les autres. Les motifs élémentaires de peau 12 en contact et connectés avec le treillis de corps 1 sont de type octaédrique tronqué simple. Les motifs élémentaires de peau 13 en superficie de la structure architecturée en treillis 10, c'est-à-dire définissant une face extérieure 22 de la structure architecturée en treillis 10, sont de type octaédrique tronqué modifié. Les motifs élémentaires de peau 13 de type octaédrique tronqué modifié recouvrent les motifs élémentaires de peau 12 de type octaédrique tronqué simple de sorte que ces derniers 12 sont pris en sandwich par les premiers 13 et le treillis de corps 1.

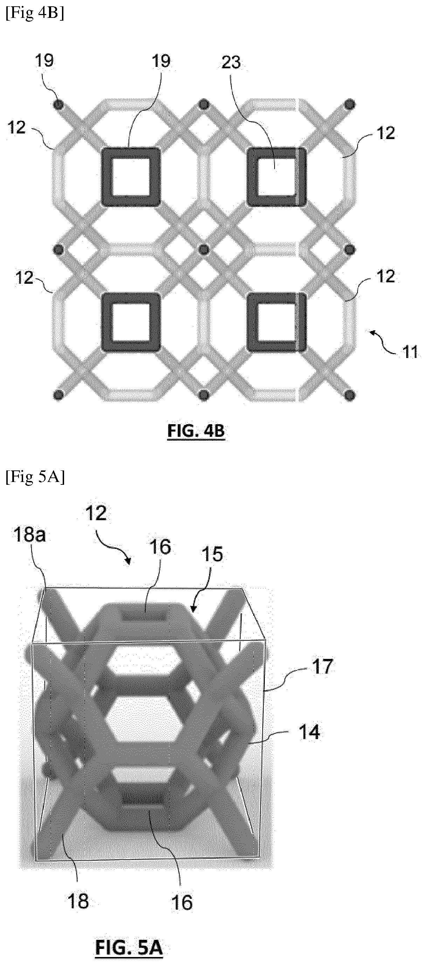

On a illustré aux figures 4A et 4B un treillis de peau 11 comportant uniquement une pluralité de motifs élémentaires de peau 12 de type octaédrique tronqué simple répétés périodiquement dans l'espace et en contact les uns avec les autres.

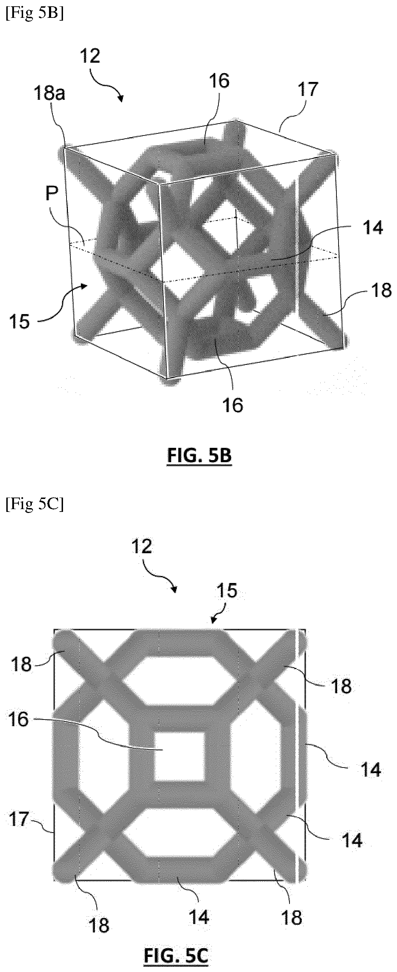

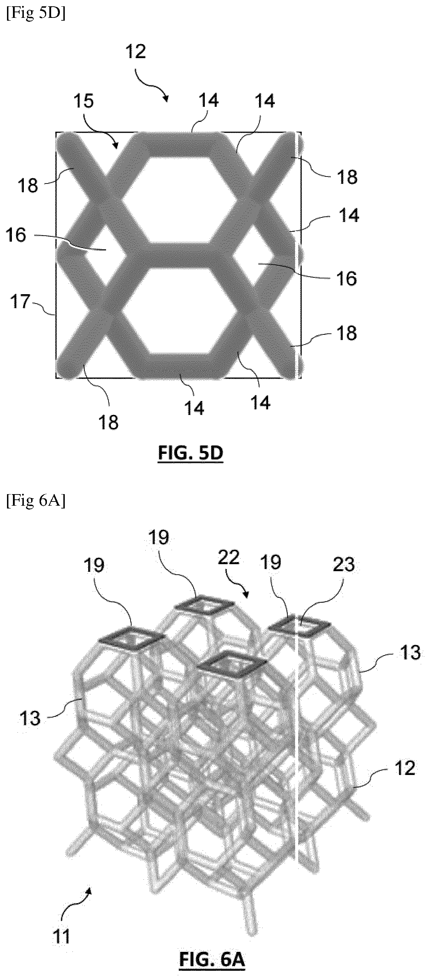

On a illustré aux figures 5A à 5D un motif élémentaire de peau 12 de type octaédrique tronqué simple. Un tel motif élémentaire de peau 12 comprend trente-six poutres de peau 14 connectées entre elles de sorte à former un octaèdre tronqué 15, les poutres de peau 14 formant les arêtes dudit octaèdre tronqué 15. L'octaèdre tronqué 15 comprend notamment six faces rhombiques 16. Le motif élémentaire de peau 12 est inscrit dans une cellule élémentaire de peau 17, qui correspond au parallélépipède rectangle circonscrit à deux des faces rhombiques 16 opposées entre elles et aux poutres de peau 14 comprises dans le plan médian P auxdites deux faces rhombiques 16. Le motif élémentaire de peau 12 comprend également huit poutres de liaison 18, chacune reliant un des sommets de la cellule élémentaire de peau 17 aux poutres de peau 14 en suivant les diagonales de la cellule élémentaire de peau 17. Les poutres de liaison 18 sont ainsi reliées à des sommets de l'octaèdre tronqué 15.

Le motif élémentaire de peau 12 de type octaédrique tronqué simple est similaire au motif dénommé « truncated octa » dans le logiciel « nTopology 3.26.3 » de la société nTopology, INC.

Comme cela est illustré aux figures 4A et 4B, les motifs élémentaires de peau 12 de type octaédrique tronqué simple adjacents sont fixés entre eux par contact des extrémités de leurs poutres de liaison 18 respectives, et par leurs faces rhombiques 16 inscrites dans leur cellule élémentaire de peau 17 qui sont confondues ou par leurs poutres de peau 14 conscrites à leur cellule élémentaire de peau 17 qui sont confondues. Les faces rhombiques 16 ou les poutres de peau 14 confondues entre deux motifs élémentaires de peau 12 de type octaédrique tronqué simple adjacents sont partagées entre ces deux motifs élémentaires de peau 12, c'est-à-dire qu'elles appartiennent à chacun de ces deux motifs élémentaires de peau 12.

Le treillis de peau 11 comprend une surface de contact 19 est l'ensemble des points du treillis de peau 11 de la surface enveloppant la face extérieure 22.

Dans l'exemple de réalisation illustré aux figures 4A et 4B, les motifs élémentaires de peau en superficie du treillis de peau 11 sont des motifs élémentaires de peau 12 de type octaédrique tronqué simple. La surface de contact 19 est composée des extrémités 18a des poutres de liaison 18 et des poutres de peau 14 formant les arrêtes des faces rhombiques 16 contenues dans la face extérieure 22 du treillis de peau 11. Ainsi, la surface de contact 19 du treillis de peau 11 est plus grande que la surface de contact 9 du treillis de corps 1. De plus, la surface de contact 19 du treillis de peau 11 n'est pas constituée uniquement d'extrémités de poutres de liaison. Ainsi, la sensation de confort pour un utilisateur s'appuyant sur une structure architecturée en treillis 10 comportant un treillis de corps 1 et le treillis de peau 11 recouvrant le treillis de corps 1 est améliorée.

Comme cela est illustré aux figures 3A et 3B, les motifs élémentaires de peau 12 du treillis de peau 11 sont fixés aux motifs élémentaires de corps 2 du treillis de corps 1 par contact des extrémités des poutres de liaison 18 et des extrémités des brins de liaison 7. Les faces des cellules élémentaires de corps 8 et les faces de cellules élémentaires de peau 17 confondues entre elles partagent les mêmes sommets. Ainsi, les motifs élémentaires de corps 2 et les motifs élémentaires de peau 12 sont alignés entre eux et le nombre de poutres flottantes ou de brins flottants, c'est-à-dire les poutres liaison 18 ou les brins de liaison 7 dont une des extrémités est libre, est limité. Notamment, il est possible de concevoir une structure architecturée en treillis 10 sans aucune poutre flottante et aucun brin flottant, ou sans aucune poutre flottante et aucun brin flottant excepté aux faces extérieures latérales 29 de la structure architecturée en treillis 10, comme illustré aux figures 3A et 3B.

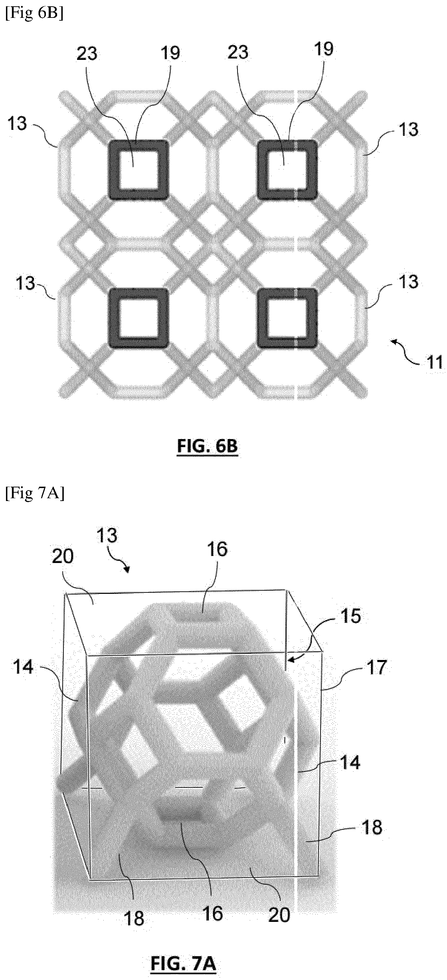

On a illustré aux figures 6A et 6B un treillis de peau 11 similaire au treillis de peau 11 illustré aux figures 3A et 3B. Ce treillis de peau 11 diffère de celui illustré sur les figures 4A et 4B en ce qu'il comporte une première strate, comportant une pluralité de motifs élémentaires de peau 12 de type octaédrique tronqué simple répétés périodiquement le long d'un plan et en contact les uns avec les autres, et, une deuxième strate superposée à la première strate, la deuxième strate comportant une pluralité de motifs élémentaires de peau 13 de type octaédrique tronqué modifié répétés périodiquement le long du même plan que les motifs élémentaires de peau 12, et, en contact les uns avec les autres. Les motifs élémentaires de peau 13 de type octaédrique tronqué modifié sont connectés aux motifs élémentaires de peau 12 de type octaédrique tronqué simple.

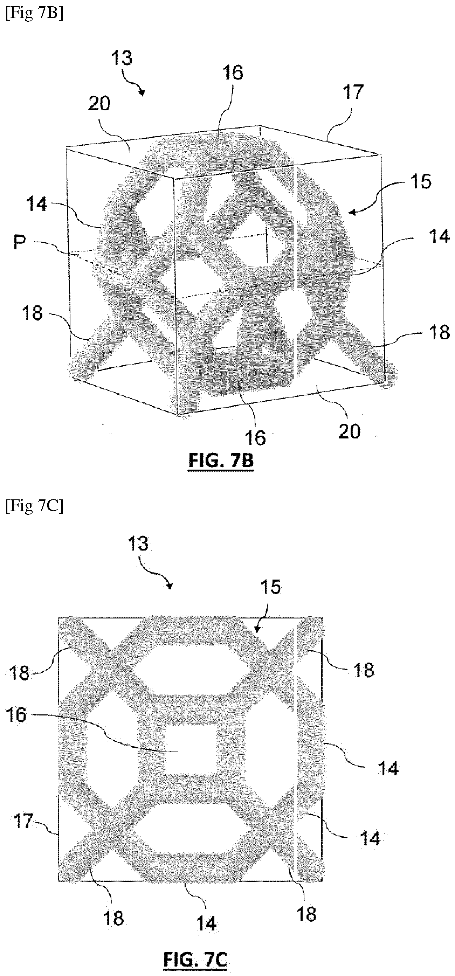

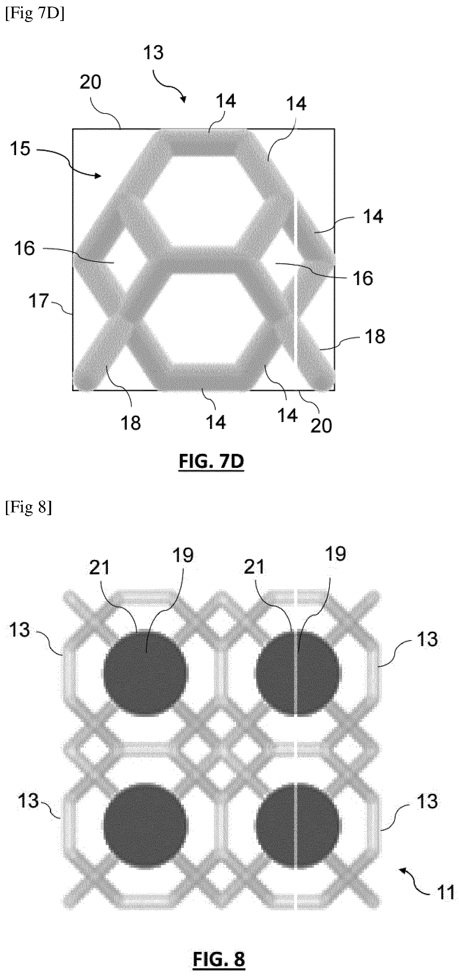

On a illustré aux figures 7A à 7D un motif élémentaire de peau 13 de type octaédrique tronqué modifié. Un tel motif élémentaire de peau 13 comprend trente-six poutres de peau 14 connectées entre elles de sorte à former un octaèdre tronqué 15, les poutres de peau 14 formant les arêtes dudit octaèdre tronqué 15. L'octaèdre tronqué 15 comprend notamment six faces rhombiques 16. Le motif élémentaire de peau 13 est inscrit dans une cellule élémentaire de peau 17, qui correspond au parallélépipède rectangle circonscrit à deux des faces rhombiques 16 opposées entre elles et aux poutres de peau 14 comprises dans le plan médian P auxdites deux faces rhombiques 16. Le motif élémentaire de peau 13 comprend également quatre poutres de liaison 18, chacune reliant un des sommets de l'octaèdre tronqué 15 à un des sommets d'une seule des deux faces 20 de la cellule élémentaire de peau 17 circonscrites aux face rhombiques 16 de l'octaèdre tronqué 15. Les sommets de l'autre des deux faces 20 de la cellule élémentaire de peau 17 circonscrites aux faces rhombiques 16 ne sont pas reliés à des poutres de liaison 18. Les poutres de liaison 18 suivent les diagonales de la cellule élémentaire de peau 17. Ainsi, le motif élémentaire de peau 13 de type octaédrique tronqué modifié est identique au motif élémentaire de peau 12 de type octaédrique tronqué simple excepté pour les poutres de liaison 18 qui sont moins nombreuses et ne relient pas tous les sommets de la cellule élémentaire de peau 17.

De manière similaire au treillis de peau 11 des figures 4A et 4B et comme cela est illustré aux figures 6A et 6B, les motifs élémentaires de peau 12 de type octaédrique tronqué simple sont fixés aux motifs élémentaire de peau 13 de type octaédrique tronqué modifié par contact entre leurs poutres de liaison 18 et par leurs faces rhombiques 16 conscrites à leur cellule élémentaire de peau 17 qui sont confondues. Les motifs élémentaires de peau 13 de type octaédrique tronqué modifié adjacents sont fixés entre eux par contact entre leurs poutres de liaison 18 respectives et par leurs poutres de peau 14 conscrites à leur cellule élémentaire de peau 17 qui sont confondues. Les faces rhombiques 16 et les poutres de peau 14 confondues entre deux motifs élémentaires de peau 12 et/ou 13 adjacents sont partagées entre ces deux motifs élémentaires de peau 12 et/ou 13, c'est-à-dire qu'elles appartiennent à chacun de ces deux motifs élémentaires de peau 12 et/ou 13.

Comme cela est illustré aux figures 6A et 6B, dans le cas où les motifs élémentaires du treillis de peau 11, destinés à être en mis en contact avec une surface plane, sont des motifs élémentaires de peau 13 de type octaédrique tronqué modifié, alors la surface de contact 19 du treillis de peau 11 est composée uniquement des poutres de peau 14 formant les faces rhombiques 16 en superficie. Contrairement au treillis de peau 11 illustré aux figures 4A et 4B, il n'y a pas de poutre de liaison 18 sur la superficie du treillis de peau 11 destinée être en contact avec une surface plane. Ainsi, la surface de contact 19 du treillis de peau 11 des figures 6A et 6B ne comprend pas de pointe. Cela permet d'améliorer la sensation de confort d'un utilisateur, s'appuyant sur une structure architecturée en treillis 10 comportant un treillis de corps 1 et le treillis de peau 11 recouvrant le treillis de corps 1, sans pour autant diminuer de manière conséquente la superficie de la surface de contact 19.

De manière avantageuse, des pastilles planes 21 peuvent être portées sur les faces rhombiques 16 des motifs élémentaires de peau 13 en superficie de la structure architecturée en treillis 10. Un tel mode de réalisation est illustré à la figure 8. Ces pastilles planes 21 permettent d'augmenter significativement la superficie de la surface de contact 19 de la structure architecturée en treillis 10 sans modifier de manière conséquente les propriétés mécaniques de ladite structure architecturée en treillis 10. Le confort procuré par une telle structure mécanique est ainsi amélioré.

De manière alternative, une housse textile, par exemple en un tissu, ou en un cuir, par exemple en Alcantara, peut être portée par les faces rhombiques 16 des motifs élémentaires de peau 13 en superficie de la structure architecturée en treillis 10.

La structure architecturée en treillis 10 peut être fabriquée par fabrication additive, par exemple sur lit de poudre, par exemple par frittage laser sur lit de poudre. La poudre peut être un polymère. Le cas échéant, la housse peut être montée sur la structure architecturée en treillis 10 après le dépoudrage de cette dernière. Ainsi, la housse n'entrave pas l'accessibilité de la structure architecturée en treillis 10 pour son dépoudrage.

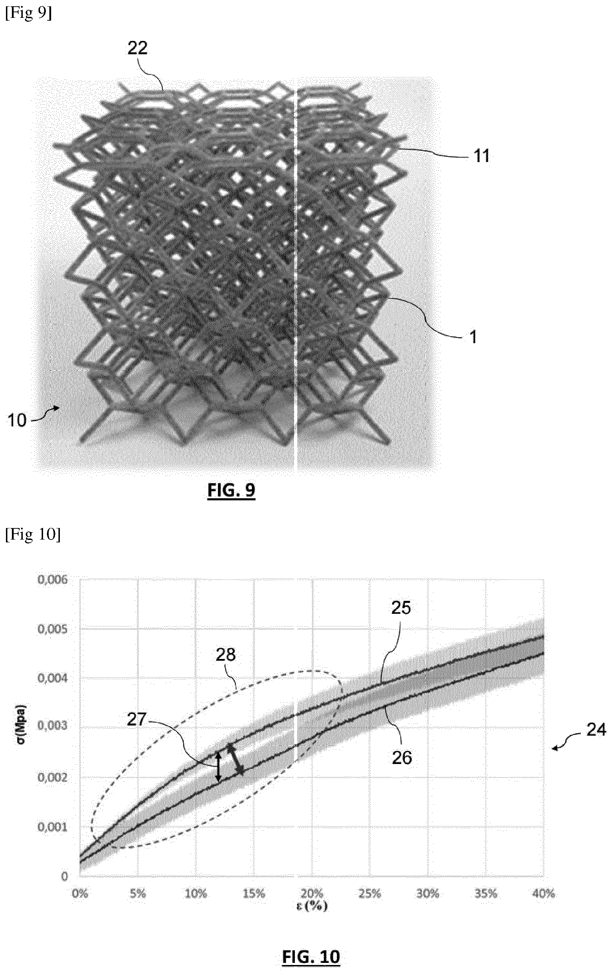

Les inventeurs ont fabriqué par fabrication additive une pièce, illustrée à la figure 9, comportant une structure architecturée en treillis 10 selon l'invention. La structure architecturée en treillis 10 est monolithique et en polyuréthane thermoplastique (TPU). La structure architecturée en treillis 10 comporte un treillis de corps 1 et un treillis de peau 11 recouvrant le treillis de corps 1.

Le treillis de corps 1 comprend une pluralité de motifs élémentaires de corps 2 répétés périodiquement dans l'espace et en contact les uns avec les autres. Les motifs élémentaires de corps 2 sont de type dodécaédrique rhombique avec leur cellule élémentaire de corps 8 de forme cubique avec des côtés de 20 mm, et, avec leurs brins de corps 3 et leurs brins de liaison 7 présentant un diamètre égal à 1,1 mm.

Le treillis de peau 11 comprend une unique strate comportant une pluralité de motifs élémentaires de peau 12 répétés périodiquement dans un plan et en contact les uns avec les autres. Les motifs élémentaires de peau 12 sont de type octaédrique tronqué simple avec leur cellule élémentaire de peau 17 de base carrée de 20 mm de côté et de hauteur égale 7 mm, les bases correspondant aux faces 20 de la cellule élémentaire de peau 17 circonscrites aux faces rhombiques 16 de l'octaèdre tronqué 15 et la hauteur étant la distance entre ces bases. Les poutres de peau 14 et les poutres de liaison 18 présentent un diamètre égal à 0,8 mm.

Les inventeurs ont réalisé des tests comparatifs en essai de compression de la structure architecturée en treillis 10 illustrée à la figure 9 et d'une structure architecturée en treillis témoin constituée uniquement d'un treillis de corps 1. Les motifs élémentaires de corps 2 de la structure architecturée en treillis témoin sont identiques aux motifs élémentaires de corps 2 du treillis de corps 1 de la structure architecturée en treillis 10 illustrée à la figure 9. Les essais en compression ont été réalisés selon une direction normale au plan dans lequel s'étend le treillis de peau 11 de la structure architecturée en treillis 10 illustrée à la figure 9.

On a illustré à la figure 10 les résultats de ces tests comparatifs sous forme de graphique 24. Le graphique 24 comprend une courbe 25 de contrainte-déformation de l'essai en compression de la structure architecturée en treillis témoin et une courbe 26 de contrainte-déformation de l'essai en compression de la structure architecturée en treillis 10 illustrée à la figure 9.

Comme observé sur le graphique 24, la structure 10 illustrée à la figure 9 présente, un module de Young plus faible que le module de Young de la structure témoin. Cela est notamment mis en évidence par l'écart en contrainte 27, à une déformation fixée, entre les courbes 25 et 26 dans la région 28 de déformation élastique des structures. Le comportement en compression de la structure 10 diffère donc par la présence du treillis de peau 11 comparément à la structure témoin. En particulier, pour des déformations en compression inférieures ou égales à 20 %, l'écart en contrainte augmente avec la déformation. Pour une déformation supérieure à 20 %, il est sensiblement constant. Ainsi, la présence d'un treillis de peau 11 sur un treillis de corps 1 de la structure architecturée en treillis 10 selon l'invention procure une amélioration du confort pour l'utilisateur en appui sur ladite structure 10.

D'autres variantes et améliorations peuvent bien évidemment être envisagées sans pour autant sortir du cadre de l'invention tel que défini par les revendications ci-après.

## Revendications

1. Pièce comportant une structure (10) monolithique architecturée en treillis comprenant :
- un treillis de corps (1) comportant une pluralité de motifs élémentaires de corps (2) répétés périodiquement et en contact les uns avec les autres, chaque motif élémentaire de corps comportant des brins de corps (3) reliés entre eux pour former les arêtes d'un dodécaèdre rhombique (4) et des brins de liaison (7) reliant les sommets à angles obtus (6) du dodécaèdre rhombique aux sommets de la cellule élémentaire de corps (8), qui est le plus petit parallélépipède rectangle circonscrit au dodécaèdre rhombique,
**caractérisée en ce que** la structure comprend un treillis de peau (11) comportant une pluralité de motifs élémentaires de peau (12, 13) répétés périodiquement et en contact les uns avec les autres, chaque motif élémentaire de peau comportant des poutres de peau (14) reliées entre elles pour former les arêtes d'un octaèdre tronqué (15) et des poutres de liaison (18) reliant les poutres de peau à au moins une partie des sommets de la cellule élémentaire de peau, qui est un parallélépipède rectangle circonscrit à deux faces rhombiques (16) de l'octaèdre tronqué opposées entre elles et aux arêtes de l'octaèdre tronqué contenues dans un plan médian (P), lesdites faces rhombiques étant symétriques l'une de l'autre par rapport au plan médian,
le treillis de peau recouvrant au moins partiellement le treillis de corps, des motifs élémentaires de corps étant en contact avec des motifs élémentaires de peau.

2. Pièce selon la revendication précédente, les poutres de liaison s'étendant le long des diagonales de la cellule élémentaire de peau.

3. Pièce selon l'une quelconque des revendications précédentes, chaque motif élémentaire de peau (12) en contact avec un motif élémentaire de corps (2) étant orienté de sorte qu'une des faces (20) de la cellules élémentaire de peau correspondante, contenant une des faces rhombiques (16) de l'octaèdre tronqué, est confondue avec une face de la cellule élémentaire de corps correspondante, de préférence ladite face de la cellule élémentaire de peau et ladite face de la cellule élémentaire de corps partageant les mêmes sommets.

4. Pièce selon l'une quelconque des revendications précédentes, au moins un, de préférence chacun, des motifs élémentaires de peau définissant une face extérieure (22) de la structure architecturée en treillis étant dépourvu de poutres de liaison orientés de l'octaèdre tronqué vers les sommets de ladite face extérieure.

5. Pièce selon l'une quelconque des revendications précédentes, chacun des motifs élémentaires de peau (13) définissant une face extérieure (22) de la structure architecturée en treillis étant orienté de sorte que la face extérieure contient une des faces rhombiques de l'octaèdre tronqué, de préférence ladite face rhombique étant une des faces inscrite à la cellule élémentaire de peau correspondante, de préférence le volume (23) entre les poutres de peau formant ladite face rhombique étant plein, de préférence du matériau formant les poutres de peau,
de préférence la pièce comprenant des pastilles planes (21) portées par les poutres de peau formant ladite face rhombique, les pastilles planes présentant une surface supérieure ou égale à la face rhombique.

6. Pièce selon l'une quelconque des revendications précédentes, les faces (20) de la cellule élémentaire de peau contenant chacune une face rhombique de l'octaèdre tronqué étant carrées, de préférence de côté compris entre 5 mm et 50 mm.

7. Pièce selon l'une quelconque des revendications précédentes, la distance entre les deux faces (20) de la cellule élémentaire de peau contenant les faces rhombiques de l'octaèdre tronqué, mesurée orthogonalement auxdites faces, étant inférieure au plus petit côté de chacune desdites faces (20) de la cellule élémentaire de peaux, de préférence comprise entre 5 mm et 50 mm.

8. Pièce selon l'une quelconque des revendications précédentes, la cellule élémentaire de corps étant cubique, de préférence de côté compris entre 5 mm et 50 mm.

9. Pièce selon l'une des quelconque des revendications précédentes, le diamètre des poutres de peau et le diamètre des poutres de liaison étant chacun inférieur au diamètre des brins de corps et au diamètre des brins de liaison.

10. Pièce selon l'une quelconque des revendications précédentes, le diamètre des brins de corps et le diamètre des brins de liaison étant égaux et/ou le diamètre des poutres de peau et le diamètre des poutres de liaison étant égaux.

11. Pièce selon l'une quelconque des revendications précédentes, le diamètre des brins de corps et/ou le diamètre des brins de liaison étant compris entre 0,6 mm et 3 mm, de préférence entre 0,8 mm et 2 mm.

12. Pièce selon l'une quelconque des revendications précédentes, le diamètre des poutres de peau et/ou le diamètre des poutres de liaison étant compris entre 0,6 mm et 3 mm, de préférence entre 0,8 mm et 2 mm.

13. Pièce selon l'une quelconque des revendications précédentes, les brins de corps et/ou les brins de liaison et/ou les poutres de peau et/ou les poutres de liaison étant en un matériau thermoplastique ou en métal, de préférence en un thermoplastique élastomère.

14. Dispositif comportant une pièce selon l'une quelconque des revendications précédentes, le dispositif étant choisi parmi :
- un amortisseur de choc,
- un support de soutien corporel, par exemple une assise d'un siège, un coussin, un matelas, un accoudoir, un appui-tête, un rembourrage de casque, ou un repose-poignet, et
- un organe de préhension, par exemple une poignée de préhension, ou un volant directionnel.

15. Procédé de fabrication d'une pièce selon l'une quelconque des revendications 1 à 13, le procédé comportant la production de la structure architecturée en treillis au moyen d'une technique de fabrication additive.

## Patentansprüche

1. Teil, das eine monolithische, als Gitter architekturierte Struktur (10)umfasst, aufweisend:
- ein Körpergitter (1), das eine Mehrzahl von elementaren Körpermustern (2) umfasst, die periodisch wiederholt werden und in Kontakt miteinander sind, wobei jedes elementare Körpermuster Körperstränge (3) umfasst, die untereinander verbunden sind, um die Kanten eines Rhombendodekaeders (4) zu bilden, und Verbindungsstränge (7), die die stumpfwinkligen Ecken (6) des Rhombendodekaeders mit den Ecken der elementaren Körperzelle (8) verbinden, die das kleinste rechteckige Parallelepiped ist, das dem Rhombendodekaeder umschrieben ist,
**dadurch gekennzeichnet, dass** die Struktur ein Hautgitter (11) aufweist, das eine Mehrzahl von elementaren Hautmustern (12, 13) umfasst, die periodisch wiederholt werden und in Kontakt miteinander sind, wobei jedes elementare Hautmuster Hautbalken (14) umfasst, die untereinander verbunden sind, um die Kanten eines Oktaederstumpfes (15) zu bilden, und Verbindungsbalken (18), die die Hautbalken mit mindestens einem Teil der Ecken der elementaren Hautzelle verbinden, die ein rechteckiges Parallelepiped ist, das zwei zueinander entgegengesetzten Rhombenflächen (16) des Oktaederstumpfes und den Kanten des Oktaederstumpfes, die in einer Mittelebene (P) enthalten sind, umschrieben ist, wobei die Rhombenflächen in Bezug auf die Mittelebene zueinander symmetrisch sind, wobei das Hautgitter das Körpergitter mindestens teilweise bedeckt, wobei elementare Körpermuster mit elementaren Hautmustern in Kontakt sind.

2. Teil nach dem vorhergehenden Anspruch, wobei sich die Verbindungsbalken entlang der Diagonalen der elementaren Hautzelle erstrecken.

3. Teil nach einem der vorhergehenden Ansprüche, wobei jedes elementare Hautmuster (12), das in Kontakt mit einem elementaren Körpermuster (2) ist, so ausgerichtet ist, dass eine der Flächen (20) der entsprechenden elementaren Hautzelle, die eine der Rhombenflächen (16) des Oktaederstumpfes enthält, mit einer Fläche der entsprechenden elementaren Körperzelle zusammenfällt, wobei die Fläche der elementaren Hautzelle und die Fläche der elementaren Körperzelle bevorzugt dieselben Ecken teilen.

4. Teil nach einem der vorhergehenden Ansprüche, wobei mindestens eines, bevorzugt jedes, der elementaren Hautmuster, das eine Außenfläche (22) der zu einem Gitter architekturierten Struktur definiert, frei von Verbindungsbalken des Oktaederstumpfes ist, die zu den Ecken der Außenfläche ausgerichtet sind.

5. Teil nach einem der vorhergehenden Ansprüche, wobei jedes der elementaren Hautmuster (13), das eine Außenfläche (22) der zu einem Gitter architekturierten Struktur definiert, so ausgerichtet ist, dass die Außenfläche eine der Rhombenflächen des Oktaederstumpfes enthält, wobei die Rhombenfläche bevorzugt eine der Flächen ist, die in die entsprechende elementare Hautzelle einbeschrieben sind, wobei das Volumen (23) zwischen den die Rhombenfläche bildenden Hautbalken bevorzugt massiv ist, bevorzugt aus dem die Hautbalken bildenden Material,
wobei das Teil bevorzugt ebene Plättchen (21) umfasst, die von den die Rhombenfläche bildenden Hautbalken getragen werden, wobei die ebenen Plättchen eine Fläche aufweisen, die größer oder gleich der Rhombenfläche ist.

6. Teil nach einem der vorhergehenden Ansprüche, wobei die Flächen (20) der elementaren Hautzelle, die jeweils eine Rhombenfläche des Oktaederstumpfes enthalten, quadratisch sind, bevorzugt mit einer Seitenlänge zwischen 5 mm und 50 mm.

7. Teil nach einem der vorhergehenden Ansprüche, wobei der Abstand zwischen den beiden Flächen (20) der elementaren Hautzelle, die die Rhombenflächen des Oktaederstumpfes enthalten, orthogonal zu den Flächen gemessen, kleiner als die kleinste Seitenlänge jeder der Flächen (20) der elementaren Hautzelle ist, bevorzugt zwischen 5 mm und 50 mm beträgt.

8. Teil nach einem der vorhergehenden Ansprüche, wobei die elementare Körperzelle kubisch ist, bevorzugt mit einer Seitenlänge zwischen 5 mm und 50 mm.

9. Teil nach einem der vorhergehenden Ansprüche, wobei der Durchmesser der Hautbalken und der Durchmesser der Verbindungsbalken jeweils kleiner als der Durchmesser der Körperstränge und der Durchmesser der Verbindungsstränge ist.

10. Teil nach einem der vorhergehenden Ansprüche, wobei der Durchmesser der Körperstränge und der Durchmesser der Verbindungsstränge gleich sind und/oder der Durchmesser der Hautbalken und der Durchmesser der Verbindungsbalken gleich sind.

11. Teil nach einem der vorhergehenden Ansprüche, wobei der Durchmesser der Körperstränge und/oder der Durchmesser der Verbindungsstränge zwischen 0,6 mm und 3 mm, bevorzugt zwischen 0,8 mm und 2 mm beträgt.

12. Teil nach einem der vorhergehenden Ansprüche, wobei der Durchmesser der Hautbalken und/oder der Durchmesser der Verbindungsbalken zwischen 0,6 mm und 3 mm, bevorzugt zwischen 0,8 mm und 2 mm beträgt.

13. Teil nach einem der vorhergehenden Ansprüche, wobei die Körperstränge und/oder die Verbindungsstränge und/oder die Hautbalken und/oder die Verbindungsbalken aus einem thermoplastischen Material oder aus Metall sind, bevorzugt aus einem elastomeren Thermoplast.

14. Vorrichtung, die ein Teil nach einem der vorhergehenden Ansprüche umfasst, wobei die Vorrichtung ausgewählt ist aus:
- einem Stoßdämpfer,
- einer Körperstütze, zum Beispiel einer Sitzfläche eines Sitzes, einem Kissen, einer Matratze, einer Armlehne, einer Kopfstütze, einer Helmpolsterung oder einer Handgelenkauflage, und
- einem Greiforgan, zum Beispiel einem Griff oder einem Lenkrad.

15. Verfahren zur Fertigung eines Teils nach einem der Ansprüche 1 bis 13, wobei das Verfahren die Herstellung der als Gitter architekturierten Struktur mittels einer Technik zur generativen Fertigung umfasst.

## Claims

1. Part including a monolithic architectural lattice structure (10) including:
- a body lattice (1) including a plurality of body elementary patterns (2) repeated periodically and in contact with one another, each body elementary pattern including body beams (3) connected to one another to form the edges of a rhombic dodecahedron (4) and connecting beams (7) connecting the obtuse angle vertices (6) of the rhombic dodecahedron to the vertices of the body elementary cell (8) which is the smallest rectangular parallelepiped circumscribing the rhombic dodecahedron, **characterized in that** the structure comprises a skin lattice (11) including a plurality of skin elementary patterns (12, 13) repeated periodically and in contact with one another, each skin elementary pattern including skin beams (14) connected to one another to form the edges of a truncated octahedron (15), and connecting beams (18) connecting the skin beams to at least some of the vertices of the skin elementary cell, which is a rectangular parallelepiped circumscribing two opposite rhombic faces (16) of the truncated octahedron and the edges of the truncated octahedron contained in a median plane (P), said rhombic faces being symmetrical to one another with respect to the median plane,
the skin lattice covering the body lattice at least partly, body elementary patterns being in contact with skin elementary patterns.

2. Part according to the preceding claim, the connecting beams extending along diagonals of the skin elementary cell.

3. Part according to either one of the preceding claims, each skin elementary pattern (12) in contact with a body elementary pattern (2) being oriented so that one of the faces (20) of the corresponding skin elementary cell containing one of the rhombic faces (16) of the truncated octahedron coincides with a face of the corresponding body elementary cell, preferably said face of the skin elementary cell and said face of the body elementary cell sharing the same vertices.

4. Part according to any one of the preceding claims, at least one, preferably each, of the skin elementary patterns defining an exterior face (22) of the architectural lattice structure including no connecting beams oriented from the truncated octahedron toward the vertices of said exterior face.

5. Part according to any one of the preceding claims, each of the skin elementary patterns (13) defining an exterior face (22) of the architectural lattice structure being oriented so that the exterior face contains one of the rhombic faces of the truncated octahedron, said rhombic face preferably being one of the faces inscribed in the corresponding skin elementary cell, preferably the volume (23) between the skin beams forming said rhombic face being filled in, preferably with the material forming the skin beams,
preferably the part including plane lands (21) carried by the skin beams forming said rhombic face, the plane lands having a surface larger than or the same size as the rhombic face.

6. Part according to any one of the preceding claims, the faces (20) of the skin elementary cell each containing a rhombic face of the truncated octahedron being square, preferably with a side length between 5 mm and 50 mm.

7. Part according to any one of the preceding claims, the distance between the two faces (20) of the skin elementary cell containing the rhombic faces of the truncated octahedron as measured orthogonally to said faces being less than the shortest side length of each of said faces (20) of the skin elementary cell, preferably between 5 mm and 50 mm.

8. Part according to any one of the preceding claims, the body elementary cell being cubic, preferably with a side length between 5 mm and 50 mm.

9. Part according to any one of the preceding claims, the diameter of the skin beams and the diameter of the connecting beams each being less than the diameter of the body beams and the diameter of the connecting beams.

10. Part according to any one of the preceding claims, the diameter of the body beams and the diameter of the connecting beams being equal and/or the diameter of the skin beams and the diameter of the connecting beams being equal.

11. Part according to any one of the preceding claims, the diameter of the body beams and/or the diameter of the connecting beams being between 0.6 mm and 3 mm, preferably between 0.8 mm and 2 mm.

12. Part according to any one of the preceding claims, the diameter of the skin beams and/or the diameter of the connecting beams being between 0.6 mm and 3 mm, preferably between 0.8 mm and 2 mm.

13. Part according to any one of the preceding claims, the body beams and/or the connecting beams and/or the skin beams and/or the connecting beams being made of a thermoplastic material or of metal, preferably of a thermoplastic elastomer.

14. Device including a part according to any one of the preceding claims, the device being chosen from:
- a shock absorber,
- a support for the body, for example a seat cushion of a seat, a cushion, a mattress, an armrest, a headrest, a helmet liner or a wrist support, and
- a holding member, for example a holding handle, or a steering wheel.

15. Method of producing a part according to any one of Claims 1 to 13, the method including the production of the architectural lattice structure by means of an additive manufacturing technique.
